Europäisches Patentamt

European Patent Office

Office européen des brevets

(19)

(11) Numéro de publication : **0 504 083 A1**

# (12) DEMANDE DE BREVET EUROPEEN

(21) Numéro de dépôt : **92470006.5**

(22) Date de dépôt : **13.02.92**

(51) Int. Cl.⁵ : **G01N 3/32**

(30) Priorité : **13.02.91 FR 91018641**

(43) Date de publication de la demande :
**16.09.92 Bulletin 92/38**

(84) Etats contractants désignés :
**BE DE ES FR GB IT NL**

(71) Demandeur : **COUVAL S.A.**
**Z.I. Les Meix**
**F-88360 Rupt sur Moselle (FR)**

(72) Inventeur : **Couval, Francis**
**3, Impasse Maldoyenne**
**F-88200 Remiremont (FR)**

(74) Mandataire : **Poupon, Michel**
**B.P. 421 3, rue Ferdinand Brunot**
**F-88011 Epinal Cédex (FR)**

(54) **Dispositif pour réaliser des essais de résistance et de fatigue.**

(57) Dispositif pour réaliser des essais de résistance et de fatigue sur des assemblages ou des mécanismes dont les performances et les qualités doivent être testées et quantifiées, caractérisé en ce qu'il comporte un cable (1,17) relié à l'ensemble à tester et le soumettant à un effort alternatif de traction dans une direction et la direction opposée, ledit cable comportant à au moins une de ses extrémités une masse (20), masse sollicitant le cable dans le sens vertical, éventuellement ajustable en cours de test, pouvant être soumise alternativement à la seule action de la gravité puis délestée par l'action d'un vérin (22) agissant en sens contraire. Application en particulier au domaine de l'ameublement.

Fig : 1

EP 0 504 083 A1

La présente invention concerne un dispositif pour réaliser des essais de résistance et de fatigue sur des assemblages ou des mécanismes dont les performances et les qualités doivent être testées et quantifiées.

Dans ce qui suit on fera expressément référence au domaine de l'ameublement. On comprendra que l'invention n'est nullement limitée à ce domaine d'application.

Les essais dans l'ameublement sont souvent réalisés par des vérins dont l'effort transmis ne peut être modifié facilement, ou par des machines spécifiques à un type d'essai bien particulier.

Ces machines sont en général très onéreuses et sont dans la pratique réservées à des centres techniques professionnels.

La présente invention se propose de remédier à ces inconvénients en proposant un dispositif unique qui permette de réaliser une grande variété d'essais et de charges donc de pouvoir réaliser par exemple les essais de résistance et de fatigue pour les produits de l'ameublement, tout ceci avec un dispositif unique.

Conformément à l'invention, ce résultat est obtenu avec un dispositif pour réaliser des essais de résistance et de fatigue sur des assemblages ou des mécanismes dont les performances et les qualités doivent être testées et quantifiées, caractérisé en ce qu'il comporte au moins un cable relié à l'élément à tester et le soumettant à un effort sensiblement horizontal alternatif de traction et de compressiondans une direction et la direction opposée, ledit cable comportant à chacune de ses extrémités une masse, masse sollicitant le cable dans le sens vertical par des poulies renvoi d'angle, masse éventuellement ajustable en cours de test, pouvant être soumise alternativement à la seule action de la gravité puis neutralisée par l'action d'un vérin agissant en sens contraire. On comprendra que le dispositif est constitué de deux ensembles symétriques dans sa principale forme de mise en oeuvre.

Selon une variante de mise en oeuvre, le dispositif peut réaliser des essais de choc par chute libre d'un corps en combinant l'action des deux vérins. Le dispositif permet de régler le cable en hauteur et en position angulaire suivant l'application.

Un cycle pendulaire du vérin de délestage permet de réaliser un essai de fatigue avec charge de l'ensemble à tester. Selon un mode avantageux de mise en oeuvre, on pourra prévoir que les masses soient constituées de rondelles libres lestées enfilées aux extrémités du cable et retenues sur celui-ci par une plaque d'arrêt.

Les masses pourront être de tout type compatible avec l'application proposée, voire constituées d'un réservoir de liquide ajustable à volonté.

Avantageusement, les déplacements des produits à tester pourront être enregistrés.

On comprendra mieux l'invention à l'aide de la description faite ci-après de certains modes de mise en oeuvre donnés à titre d'exemples non limitatifs, en référence aux dessins annexés dans lesquels :

– la figure 1 est une représentation en perspective de l'un des ensembles du dispositif de l'invention ;

– la figure 2 est une vue en élévation latérale de l'ensemble de la figure 1 ;

– la figure 3 est une vue de dessus de l'ensemble de la figure 1 ;

– la figure 4 est une vue de détail, en coupe partielle, au niveau d'une masse et de la tête du vérin correspondant ;

– les figures 5 et 6 schématisent le fonctionnement du dispositif de l'invention ;

– les figures 7 à 12 illustrent schématiquement une application au test de:

. figure 7 : table

. figure 8 : meuble

. figure 9 : chaise

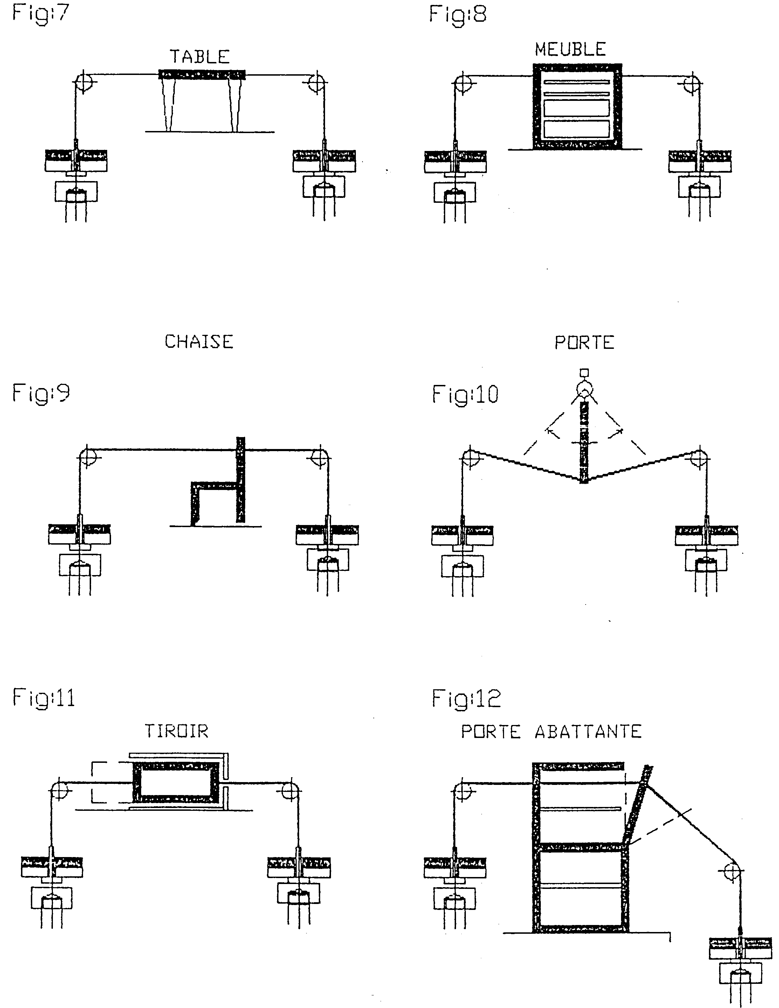

. figure 10 : porte

. figure 11 : tiroir

. figure 12 : porte abattante,

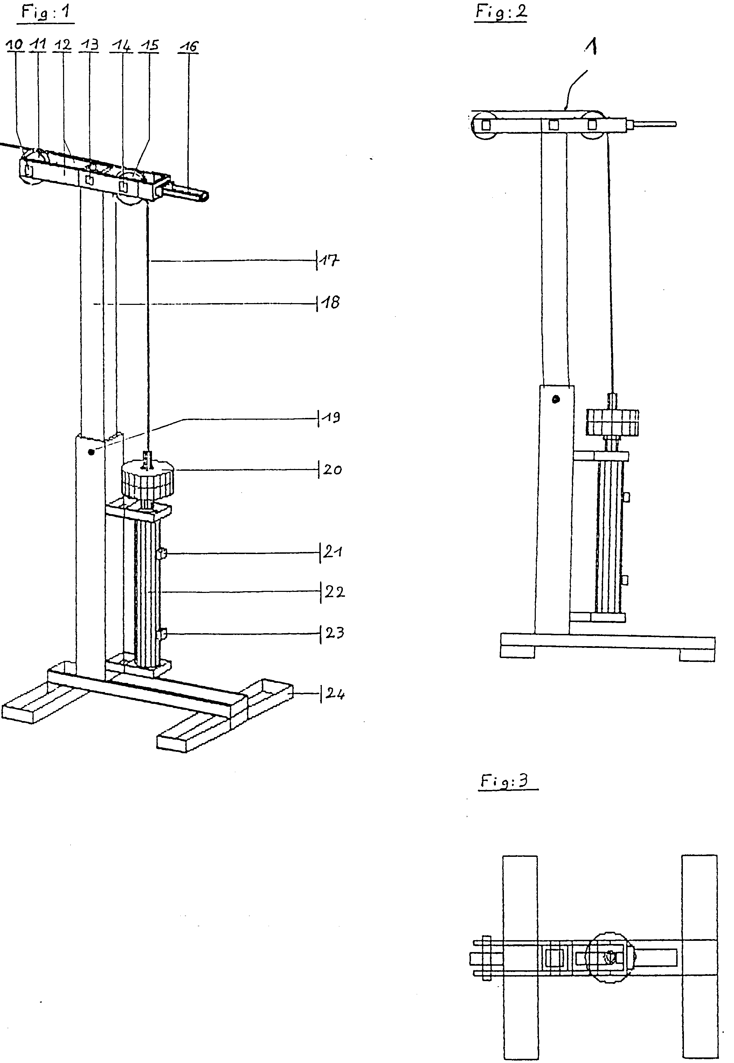

En référence à la figure 1, le dispositif est supporté par un bati (24) mécano-soudé. Il comporte un cable (17) qui transmet un effort de traction à l'élément à tester par des rondelles libres lestées (20). Le délestage des rondelles est réalisé par un vérin pneumatique (22). Le cable (17) est guidé sur des galets (11, 15) montés sur des axes (10, 14). Le réglage angulaire du cable est réalisé par l'inclinaison de flasques (12) pivotant autour d'un axe (13). Le réglage en hauteur est réalisé par la position d'une potence (18) dans la colonne du bati (24) oùelle est maintenue en position par le blocage d'une vis (19). La course de la tige du vérin (22) est variable en fonction de la position des capteurs de fin de course (21,23). Un vérin (16) horizontal permet de bloquer en position le cable (17).

Un cycle pendulaire du vérin permet de réaliser un essai de fatigue sur l'ensemble à tester.

Le montage d'un dispositif identique sur une autre extrémité de l'ensemble à tester permet de soumettre celui-ci à des efforts alternés et opposés.

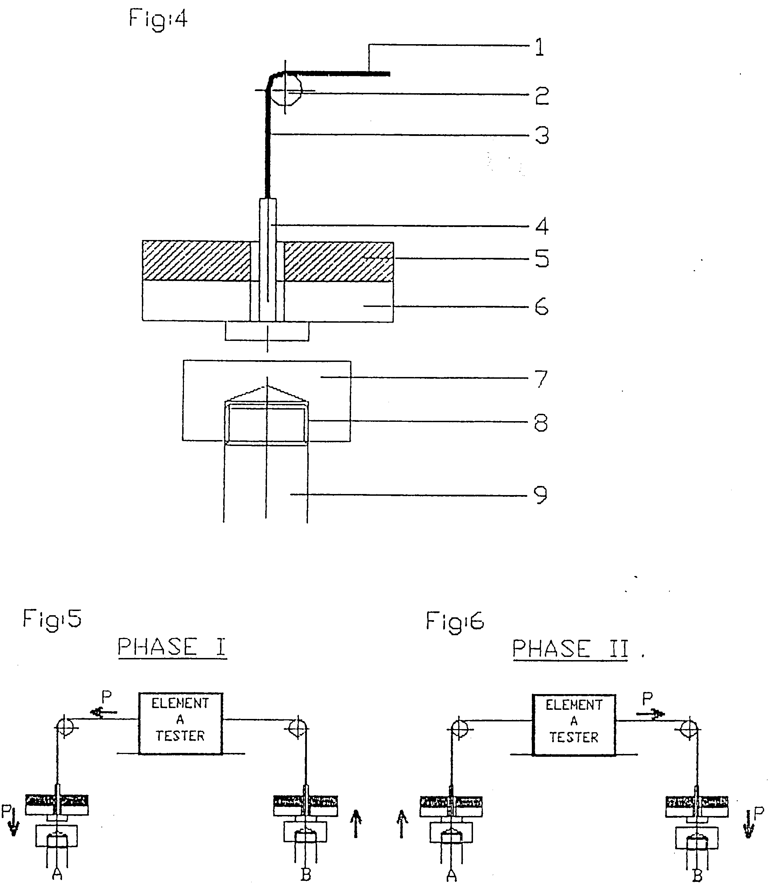

Le principe de fonctionnement est illustré aux figures 4, 5 et 6.

Le cable (1) fixé sur l'élément à tester est relié à son autre extrémité à un axe épaulé (4) sur lequel sont empilées des rondelles lestées (5,6) indépendantes l'une de l'autre. Dans ce cas le cable transmet un effort de traction fonction du poids des rondelles lestées.

Au cours de la phase (I), le vérin (B) monte pour détendre le cable de ce côté pendant que le vérin côté (A) descend. L'élément est alors soumis à un effort (P) côté (A).

Au cours de la phase (II), le mouvement est inversé et l'ensemble à tester est alors soumis à un effort côté (B).

Le cable (1) est relié à l'axe (4) par une section de cable (3) passant sur une poulie renvoi d'angle (2, 15). La tête (8) de la tige de vérin (9) est munie d'un plateau (7).

La commande de cette installation peut être réalisée manuellement ou par un automatisme cablé ou programmé pour gérer le temps au cours de ces essais.

Les figures 7 à 12 montrent des exemples d'applications industrielles de l'invention sur des éléments de l'ameublement.

Les courses des vérins sont délimitées par des capteurs (21,23) placés sur le corps du vérin ou sur la potence.

Le réglage et le maintien de la potence en position sont fonction de chaque application et des dimensions des ensembles à tester.

La potence est réalisée en mécano-soudure.

Le dispositif selon l'invention est particulièrement destiné aux essais de résistance etde fatigue dans l'ameublement.

On comprendra que des modifications peuvent être apportées sans sortir du cadre de l'invention.

Ainsi, le cable pourra être tout élément souple compatible avec les différentes fonctions.

De même, le vérin pourrait être remplacé par un moteur électrique neutralisant alternativement l'une ou l'autre masse.

**Revendications**

1. Dispositif pour réaliser des essais de résistance et de fatigue sur des assemblages ou des mécanismes dont les performances et les qualités doivent être testées et quantifiées, caractérisé en ce qu'il comporte un cable (1, 17) relié à l'ensemble à tester et le soumettant à un effort alternatif de traction dans une direction et la direction opposée, ledit cable comportant à au moins une de ses extrémités une masse (20), masse sollicitant le cable dans le sens vertical, éventuellement ajustable en cours de test, pouvant être soumise alternativement à la seule action de la gravité puis neutralisée par l'action d'un vérin (22) agissant en sens contraire.

2. Dispositif selon la revendication 1, caractérisé en ce qu'il comporte deux ensembles symétriques sollicitant alternativement l'ensemble à tester selon des efforts alternés et opposés.

3. Dispositif selon l'une quelconque des revendications 1 et 2, caractérisé en ce que les masses sont constituées de rondelles libres (5,6) lestées enfilées aux extrémités du cable et retenues sur celui-ci par un axe épaulé (4).

4. Dispositif selon l'une quelconque des revendication 1 à 3, caractérisé en ce que les masses sont ajustables en cours de test.

5. Dispositif selon la revendication 4, caractérisé en ce que les masses sont constituées d'un réservoir de liquide ajusté à volonté.

6. Dispositif selon l'une quelconque des revendications 1 à 4, caractérisé en ce que le cable (1, 17) est guidé sur des galets (11, 15) montés sur des axes (10, 14), le réglage angulaire du cable étant réalisé par l'inclinaison de flasques (12) pivotant autour d'un axe (13), le réglage en hauteur étant réalisé par la position d'une potence (18) dans la colonne du bati (24) où elle est maintenue en position par le blocage d'une vis (19).

7. Dispositif selon la revendication 6, caractérisé en ce que la course de la tige du vérin (22) est variable en fonction de la position de capteurs de fin de course (21,23).

8. Dispositif selon l'une quelconque des revendications 6 et 7, caractérisé en ce qu'un vérin (16) horizontal permet de bloquer en position le cable (17).

9. Dispositif selon la revendication 1 pour la réalisation d'essais de fatigue, caractérisé en ce que le vérin fonctionne selon un cycle pendulaire.

10. Dispositif selon l'une quelconque des revendications 1 à 9, caractérisé en ce que les déplacements sont enregistrés.

Fig:1

Fig:2

Fig:3

Fig:4

1
2
3

4
5
6

7
8

9

Fig:5

PHASE I

Fig:6

PHASE II.

Fig:7

Fig:8

TABLE

MEUBLE

CHAISE

PORTE

Fig:9

Fig:10

Fig:11

Fig:12

TIROIR

PORTE ABATTANTE

EP 0 504 083 A1

| Office européen des brevets | RAPPORT DE RECHERCHE EUROPEENNE | Numero de la demande |
|---|---|---|

EP    92 47 0006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-1 576 728 (R.C. PEARSON)<br>* page 2, ligne 89 - page 3, ligne 15; figure *<br>--- | 1,3,4 | G01N3/32 |
| A | EP-A-0 007 740 (EURATOM)<br>* page 3, ligne 11 - ligne 30; figure 1 *<br>--- | 1,8 | |
| A | DE-C-375 013 (G. DUFFING)<br>* page 2, ligne 15 - ligne 71; figure *<br>--- | 1,3,4 | |
| A | GB-A-2 217 024 (HOYA CORPORATION)<br>* abrégé; figures 3-11 *<br>--- | 1,9 | |
| A | DE-C-399 611 (PORZELLANFABRIK KAHLA)<br><br>----- | | |

|  |
|---|
| DOMAINES TECHNIQUES RECHERCHES (Int. Cl.5) |
| G01N<br>G01M |

Le présent rapport a été établi pour toutes les revendications

| Lieu de la recherche | Date d'achèvement de la recherche | Examinateur |
|---|---|---|
| LA HAYE | 06 MAI 1992 | HODSON C.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................
& : membre de la même famille, document correspondant

EPO FORM 1503 03.82 (P0402)

7